# EUROPÄISCHE PATENTSCHRIFT

(11) **EP 2 966 045 B1**
(45) Veröffentlichungstag und Bekanntmachung des Hinweises auf die Patenterteilung: **03.01.2018**
(21) Anmeldenummer: 14176361.5
(22) Anmeldetag: 09.07.2014
(51) Int. Cl.: C03B 33/03, C03B 33/037, B65G 49/06

(54) **Verfahren und System zur Herstellung von zugeschnittenen Glasscheiben**
Method and system for the preparation of cut glass panes
Procédé et système de fabrication de vitres coupées sur mesure

(43) Veröffentlichungstag der Anmeldung: 13.01.2016
(73) Patentinhaber: Energy Glas GmbH, 34466 Wolfghagen (DE)
(72) Erfinder: Dohmann, Elmar, 37671 Höxter (DE)
(74) Vertreter: DREISS Patentanwälte PartG mbB

(56) Entgegenhaltungen:
- EP-A1- 0 837 040
- EP-A1- 2 279 972
- WO-A1-2014/085449
- FR-A1- 2 975 688
- GB-A- 721 024
- JP-A- 2002 267 822
- JP-A- 2013 136 488
- US-A- 2 013 459
- US-A- 3 216 809
- US-A- 3 716 176
- US-A1- 2012 210 842

## Beschreibung

Die Erfindung betrifft ein Verfahren zur Herstellung von zugeschnittenen Glasscheiben, entsprechend dem Oberbegriff des Patentanspruchs 1.

Aus der DE 20 2007 017 035 U1 ist eine Vorrichtung zum Ausleiten von Glasplatten aus einer Fertigungslinie bekannt. Bei dieser Vorrichtung werden in einem laufenden Fertigungsprozess, bei dem Glasplatten unterschiedlichen Formats zugeschnitten werden, Fehlstellen in den gefertigten Glasplatten erkannt und offensichtliche Ausschuss-Glasplatten aus einer Haupttransportlinie ausgeleitet und somit aus dem laufenden Fertigungsprozess entfernt. Insbesondere dann, wenn während des laufenden Fertigungsprozesses Glasplatten unterschiedlichen Formats zugeschnitten werden, beansprucht die Ausleitung der Ausschuss-Glasplatten vergleichsweise viel Zeit, insbesondere bei sehr großen Ausschuss-Glasplatten.

Aus der US 3 216 809 A und der GB 721,024 A ist ein Verfahren mit den Merkmalen des Oberbegriffs des Patentanspruchs 1 bekannt.

Aus der JP 2002 267822 A ist bekannt, eine Glasscheibe nach deren Trennbearbeitung mittels eines Blasstroms zu reinigen.

Aus der EP 2 279 972 A1 ist bekannt, unmittelbar vor und unmittelbar nach einer mechanischen Bearbeitung einer Glasscheibe diese mit einem Blasstrom zu reinigen.

Aus der US 3 716 176 A ist es bekannt, Glasscheiben nach deren Trennbearbeitung zu waschen und zu trocknen.

Hiervon ausgehend liegt der vorliegenden Erfindung die Aufgabe zugrunde, ein Verfahren zur Herstellung von zugeschnittenen Glasscheiben anzugeben, mit welchem die Produktionsgeschwindigkeit erhöht werden kann.

Diese Aufgabe wird bei einem Verfahren der eingangs genannten Art erfindungsgemäß durch die kennzeichnenden Merkmale des Patentanspruchs 1 gelöst.

Der Glasscheibenrohling wird gereinigt, also beispielsweise Staub oder Trennmittel von einem Glasscheibenrohling entfernt. Die Reinigung des Glasscheibenrohlings ermöglicht es, eine sich an die Reinigung des Glasscheibenrohlings anschließende Detektion von Fehlstellen zu vereinfachen. Hierbei können beispielsweise optische Sensoren, insbesondere in Form von Scannern, eingesetzt werden, welche mit einem Bildauswertungssystem gekoppelt sind. Auf diese Weise können Fehlstellen in dem Glasscheibenrohling, beispielsweise Partikeleinschlüsse, detektiert und lokalisiert werden. Bei der sich an die Detektion der Fehlstellen anschließende Trennbearbeitung des Glasscheibenrohlings erfolgt die Auswahl der Trenn- oder Schnittlinien dann nicht nur in Abhängigkeit der Sollmaße der aus dem Glasscheibenrohling zuzuschneidenden Glasscheiben, sondern zusätzlich auch in Abhängigkeit der Lage der detektierten Fehlstellen. Dies ermöglicht es, fehlstellenfreie Bereiche des Glasscheibenrohlings zu identifizieren und nur innerhalb dieser Bereiche Glasscheibenzuschnitte durchzuführen. Diejenigen Bereiche des Glasscheibenrohlings, die Fehlerstellen aufweisen, können ausgespart werden; es wird also nicht eine Glasscheibe mit einem Sollmaß erzeugt, welche eine Fehlstelle aufweist, die dann zeitaufwendig aussortiert werden muss. Vielmehr ist es möglich, ausschließlich fehlstellenfreie zugeschnittene Glasscheiben herzustellen.

Zur weiteren Optimierung des Herstellungsverfahrens ist es bevorzugt, dass die Reinigung des Glasscheibenrohlings und die Detektion der Fehlstellen des Glasscheibenrohlings während einer kontinuierlichen Förderung des Glasscheibenrohlings erfolgt.

Für eine möglichst effiziente Herstellung von zugeschnittenen Glasscheiben ist es ferner bevorzugt, dass die Reinigung des Glasscheibenrohlings und die Detektion der Fehlstellen des gereinigten Glasscheibenrohlings über die gesamte, quer zu einer Transportrichtung des Glasscheibenrohlings gemessene Breite des Glasscheibenrohlings erfolgt.

Der Glasscheibenrohling weist vorzugsweise eine Breite von 3,21 Meter auf. Auf diese Weise können Bestandsanlagen nach einer Umrüstung für das erfindungsgemäße Verfahren verwendet werden.

Der Glasscheibenrohling hat vorzugsweise eine in Transportrichtung des Glasscheibenrohlings gemessene Länge von 6 Meter. Auch dieses Maß vereinfacht die Nutzung von bereits bestehenden Fertigungsanlagen.

Zur Reinigung des Glasscheibenrohlings wird erfindungsgemäß vorgeschlagen, die Oberfläche des Glasscheibenrohlings mit einem Gasfluidstrom zu beaufschlagen. Ein Gasfluidstrom ermöglicht den Abtransport von Schmutzpartikeln und/oder Trennmittel, ohne dass der Fluidstrom seinerseits die Oberfläche des Glasscheibenrohlings benetzt, wie dies bei einem Nassfluidstrom der Fall wäre.

Für eine effiziente Reinigung wird erfindungsgemäß vorgeschlagen, dass der Fluidstrom als auf die Oberfläche des Glasscheibenrohlings gerichteter Blasstrom ausgebildet ist. Auf diese Weise können auf der Oberfläche des Glasscheibenrohlings vorhandene Schmutzpartikel abgelöst werden.

Erfindungsgemäß ist vorgesehen, dass die mindestens eine, auf Sollmaß zugeschnittene Glasscheibe gereinigt wird. Bei diesem Verfahren erfolgt also eine zweifache Reinigung des Glasscheibenmaterials; zum einen als Reinigung des Glasscheibenrohlings zur Vorbereitung der Detektion von Fehlstellen und zum anderen zur Reinigung der fertig zugeschnittenen Glasscheibe und zur Vorbereitung eines nachfolgenden Fertigungsprozesses, beispielsweise von Fenstern oder Türen. Reinigungssysteme zur Reinigung auf Sollmaß zugeschnittener Glasscheiben sind beispielsweise aus der DE 10 2010 021 127 A1 bekannt.

Ferner wird auf die nachstehend im Zusammenhang mit einem erfindungsgemäßen System beschriebenen Ausgestaltungen und Vorteile Bezug genommen.

Die Erfindung betrifft ferner ein System zur Herstellung von zugeschnittenen Glasscheiben, entsprechend dem Oberbegriff des Patentanspruchs 6.

Der Erfindung liegt die weitere Aufgabe zugrunde, ein System zur Herstellung von zugeschnittenen Glasscheiben anzugeben, mit welchem die Produktionsgeschwindigkeit erhöht werden kann.

Diese Aufgabe wird bei einem System der vorstehend genannten Art erfindungsgemäß gelöst durch die kennzeichnenden Merkmale des Patentanspruchs 5. Bei dem System zur Herstellung von zugeschnittenen Glasscheiben sind vor dem Trennwerkzeug und in Transportrichtung des Glasscheibenrohlings gesehen eine Reinigungseinrichtung zur Reinigung des Glasscheibenrohlings und eine Detektierungseinrichtung zur Detektierung von Fehlstellen in dem gereinigten Glasscheibenrohling angeordnet.

Bei einer erfindungsgemäßen Ausgestaltung der Reinigungseinrichtung ist eine Abblaseinrichtung zur Erzeugung eines auf die Oberfläche des Glasscheibenrohlings gerichteten Fluidstroms vorgesehen. Eine solche Abblaseinrichtung umfasst eine quer, insbesondere senkrecht zu der Transportrichtung des Glasscheibenrohlings orientierte Blasleiste. Eine solche Blasleiste kann als sich über die Breite des Glasscheibenrohlings erstreckende Düsenleiste ausgebildet sein und/oder eine Vielzahl von Blasdüsen umfassen.

Besonders bevorzugt ist es ferner, wenn die Reinigungseinrichtung eine Absaugeinrichtung umfasst. Diese Reinigungseinrichtung kann nach einer ersten Ausgestaltung einen Fluidsaugstrom erzeugen, welcher Schmutzpartikel von der Oberfläche des Glasscheibenrohlings absaugt. Nach einer Alternative ist die Absaugeinrichtung zusätzlich zu der vorstehend genannten Abblaseinrichtung vorgesehen, sodass die Absaugeinrichtung dazu dient, Schmutzpartikel abzuführen, welche zuvor mittels eine Fluidblasstroms von der Oberfläche des Glasscheibenrohlings entfernt wurden.

Das erfindungsgemäße System umfasst eine zweite Reinigungseinrichtung zur Reinigung von mindestens einer mittels des Trennwerkzeugs aus dem Glasscheibenrohling zugeschnittenen Glasscheibe.Die zweite Reinigungseinrichtung umfasst eine Wascheinrichtung und eine Trockeneinrichtung. Auf diese Weise kann die zugeschnittene Glasscheibe mit einer Waschflüssigkeit gewaschen und anschließend getrocknet werden.

Ferner wird auf die weiter oben im Zusammenhang mit dem erfindungsgemäßen Verfahren beschriebenen Ausgestaltungen und Vorteile Bezug genommen.

Weitere Merkmale und Vorteile der Erfindung sind Gegenstand der nachfolgenden Beschreibung und der zeichnerischen Darstellung eines bevorzugten Ausführungsbeispiels.

In der Zeichnung zeigt:
- Fig. 1: eine Draufsicht eines Systems zur Herstellung von geschnittenen Glasscheiben, wobei ein Fehlstellen aufweisender, nicht zugeschnittener Glasscheibenrohling dargestellt ist;
- Fig. 2: eine der Fig. 1 entsprechende Ansicht während der Detektion einer Fehlstelle;
- Fig. 3: eine der Fig. 1 entsprechende Ansicht während der Reinigung des nicht zugeschnittenen Glasscheibenrohlings;
- Fig. 4: eine der Fig. 1 entsprechende Ansicht während der Trennbearbeitung des gereinigten Glasscheibenrohlings; und
- Fig. 5: eine der Fig. 1 entsprechende Ansicht, wobei eine auf ein Sollmaß zugeschnittene Glasscheibe dargestellt ist.

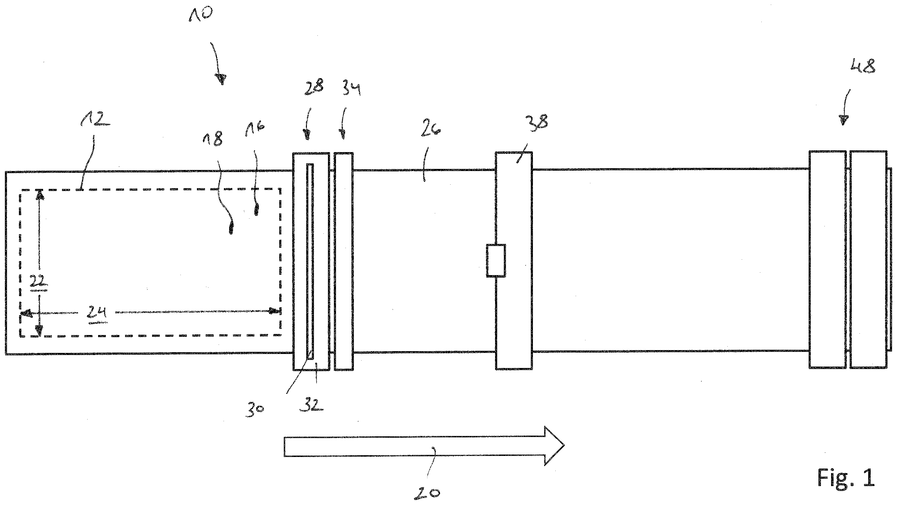

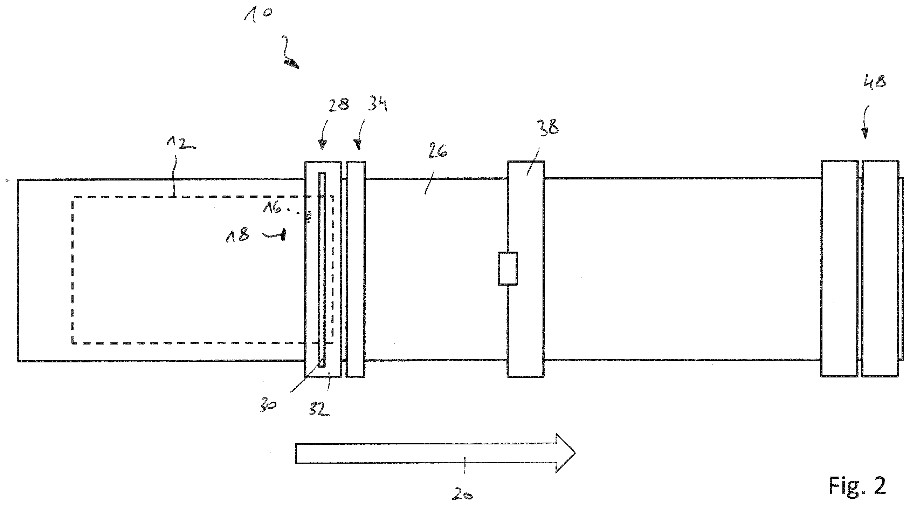

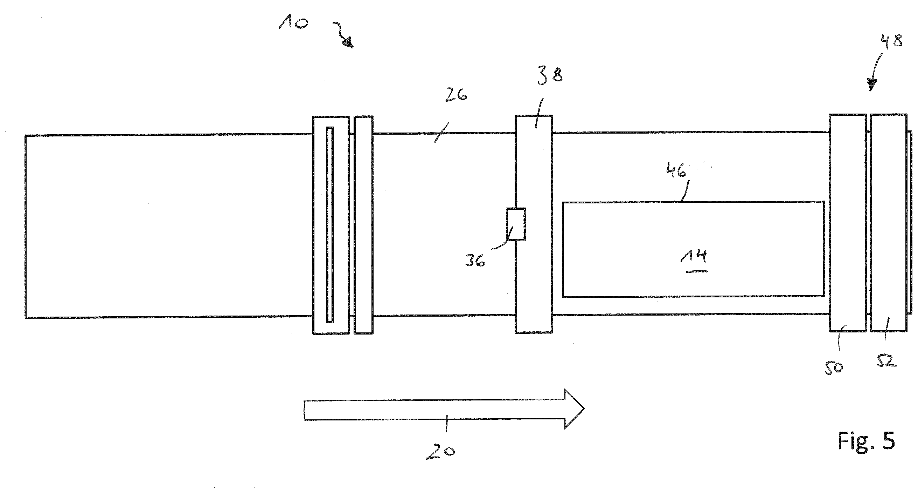

Ein System zur Herstellung von zugeschnittenen Glasscheiben ist in der Zeichnung insgesamt mit dem Bezugszeichen 10 bezeichnet. Das System 10 dient dazu, ausgehend von einem in den Figuren 1 bis 4 mit gestrichelten Umrissen dargestellten Glasscheibenrohling 12 so zu bearbeiten, dass eine fehlstellenfreie, auf ein Sollmaß zugeschnittene Glasscheibe 14 (vgl. Figur 5) entsteht.

Der Glasscheibenrohling 12 ist im Idealfall fehlstellenfrei, weist in der Praxis jedoch häufig Fehlstellen auf, beispielsweise Partikeleinschlüsse, welche in der Zeichnung beispielhaft dargestellt und mit den Bezugszeichen 16 und 18 bezeichnet sind.
Der Glasscheibenrohling 12 weist in einem unbearbeiteten Ausgangszustand eine quer zu einer Transportrichtung 20 gemessene Breite von 3,21 Meter auf. Eine in Transportrichtung 20 gemessene Länge 24 des Glasscheibenrohlings 12 beträgt beispielsweise 6 Meter. Der Glasscheibenrohling 12 weist also insbesondere eine rechteckige Ausgangsform mit einer Breite 22 von 3,21 Metern und einer Länge 24 von 6 Metern auf.

Das System 10 umfasst eine an sich bekannte Transporteinrichtung 26, mit welcher ein unbearbeiteter Glasscheibenrohling 12 (vgl. Figur 1) in Transportrichtung 20 entlang der Transporteinrichtung 26 transportiert wird. Im Zuge des Transports eines Glasscheibenrohlings 12 wird dieser vorzugsweise kontinuierlich in Transportrichtung 20 gefördert. Dabei wird ein nicht zugeschnittener, ungereinigter Glasscheibenrohling 12 (vgl. Figur 1) in Förderrichtung 20 zunächst einer Reinigungseinrichtung 28 zugeführt. Die Reinigungseinrichtung 28 umfasst eine sich zumindest über die gesamte Bereite 22 des Glasscheibenrohlings 12 erstreckende Blasleiste 30, welche einen auf die Oberfläche des Glasscheibenrohlings 12 gerichteten Gasfluidstrom erzeugt. Die mittels des Gasfluidstroms von der Oberfläche des Glasrohlings abgelösten Schmutzpartikel werden anschließend mit Hilfe einer Absaugeinrichtung 32, die Teil der Reinigungseinrichtungseinrichtung 28 ist, abgesaugt.

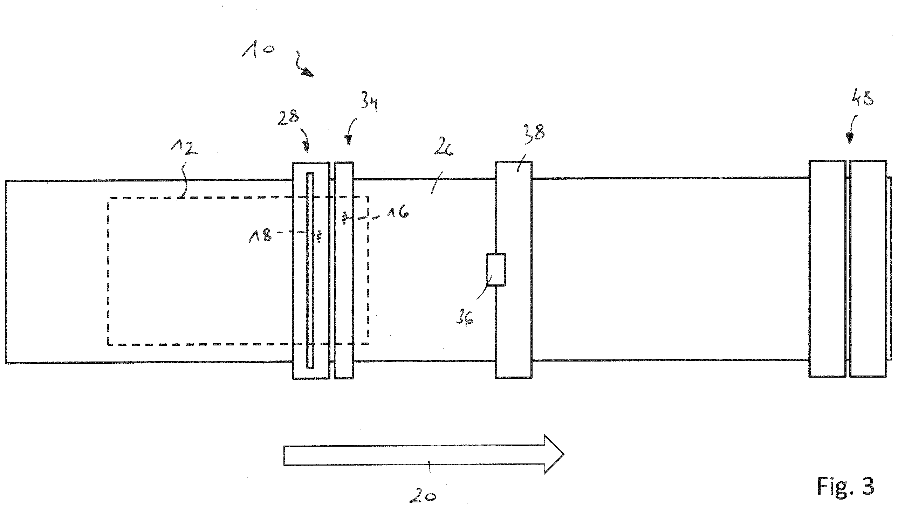

In Transportrichtung 20 des Glasscheibenrohlings 12 ist nach der Reinigungseinrichtung 28 eine Detektierungseinrichtung 34 vorgesehen. Diese Detektierungseinrichtung umfasst beispielsweise eine sich über die gesamte Breite 22 des Glasscheibenrohlings 12 erstreckendende Scanleiste, welche mit einem Bildauswertungssystem gekoppelt ist, um die Fehlstellen 16, 18 des Glasscheibenrohlings 12 zu erfassen und die Lage der Fehlstellen 16, 18 relativ zu den Abmessungen des Glasscheibenrohlings 12 zu bestimmen, vgl. Figur 3.

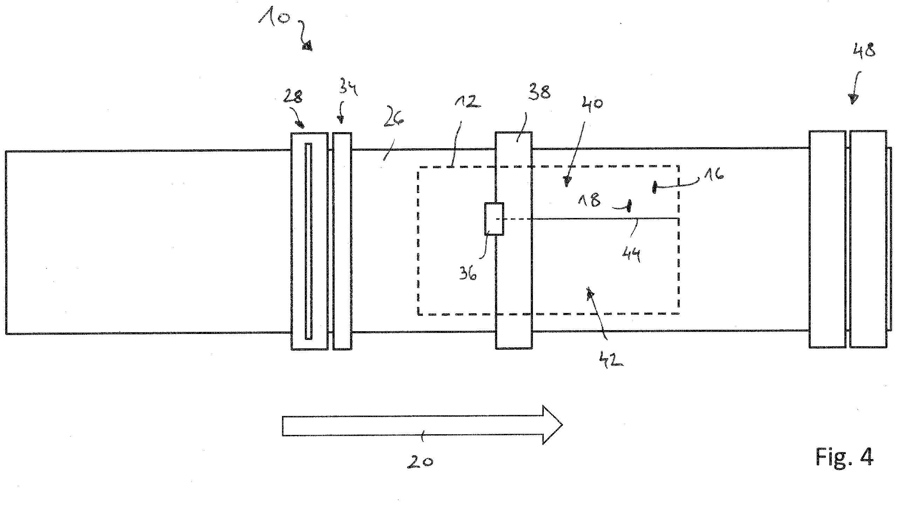

Im Anschluss an die Detektion der Fehlstellen 16, 18 wird der noch nicht zugeschnittene, jedoch gereinigte und gescannte Glasscheibenrohling 12 einem Trennwerkzeug zugeführt (vgl. Figur 4). Das Trennwerkzeug 36 ist an einem Trennwerkzeughalter 38 gehalten, welcher sich zumindest über die gesamte Breite 22 des Glasscheibenrohlings 12 erstreckt. Das Werkzeug 36 ist entlang des Werkzeughalters 38, also in Breitenrichtung des Glasscheibenrohlings 12, frei positionierbar.

Im Zuge der Trennbearbeitung des Glasscheibenrohlings 12 wird das Trennwerkzeug 36 so angesteuert, dass Fehlstellen 16, 18 aufweisende Abschnitte 40 des Glasscheibenrohlings 12 ausgespart werden. Eine Herstellung von zugeschnittenen Glasscheiben 14 erfolgt unter ausschließlicher Verwendung einer fehlstellenfreien Nutzfläche 42.

Während der Trennbearbeitung des Glasscheibenrohlings 12 erzeugt das Trennwerkzeug 36 eine Trenn- oder Schnittlinie 44, vgl. Figur 4, wodurch eine Berandung 46 einer auf Sollmaß zugeschnittene Glasscheibe 14 entsteht, vgl. Figur 5.

Optional ist vorgesehen, dass das System 10 eine zweite Reinigungseinrichtung 48 umfasst, welche dazu dient, eine fertig zugeschnittene Glasscheibe 14 zu reinigen, vgl. Figur 5. In vorteilhafter Weise umfasst die zweite Reinigungseinrichtung 48 eine (Nass-)Wascheinrichtung 50 und eine sich in Transportrichtung 20 anschließende Trockeneinrichtung 52.

Vorstehend wurde unter Bezugnahme auf die Figuren 1 bis 5 ein Verfahren und ein System 10 zur Herstellung von zugeschnittenen Glasscheiben 14 anhand der Be- und Verarbeitung eines einzelnen Glasscheibenrohlings 12 beschrieben. In der Praxis ist es natürlich vorteilhaft, wenn beispielsweise während der Trennbearbeitung eines Glasscheibenrohlings 12 bereits ein Folge-Glasscheibenrohling 12 auf der Transporteinrichtung 26 angeordnet ist und mittels der Reinigungseinrichtung 28 gereinigt und mittels der Detektionseinrichtung 34 auf Fehlstellen hin untersucht wird, während gleichzeitig die Trennbearbeitung des ersten Glasscheibenrohlings 12 erfolgt.

## Patentansprüche

1. Verfahren zur Herstellung von zugeschnittenen Glasscheiben (14), bei welchem ein nicht zugeschnittener Glasscheibenrohling (12) bereitgestellt wird und der Glasscheibenrohling (12) mit einem Trennwerkzeug (36) bearbeitet wird, um mindestens eine auf ein Sollmaß zugeschnittene Glasscheibe (14) zu erzeugen, wobei der nicht zugeschnittene Glasscheibenrohling (12) gereinigt wird, wobei anschließend Fehlstellen (16, 18) in dem Glasscheibenrohling (12) detektiert werden und wobei die sich dann anschließende Trennbearbeitung des Glasscheibenrohlings (12) in Abhängigkeit des Sollmaßes der mindestens einen Glasscheibe (14) und in Abhängigkeit der detektierten Fehlstellen (16, 18) durchgeführt wird, **dadurch gekennzeichnet, dass** die Reinigung des Glasscheibenrohlings (12) in dessen unbearbeitetem Ausgangszustand eine Beaufschlagung der Oberfläche des Glasscheibenrohlings (12) mit einem Gasfluidstrom umfasst, der als auf die Oberfläche des Glasscheibenrohlings (12) gerichteter Blasstrom ausgebildet ist, und dass die mindestens eine, auf Sollmaß zugeschnittene Glasscheibe (14) gereinigt wird, indem sie gewaschen und getrocknet wird.

2. Verfahren nach Anspruch 1, **dadurch gekennzeichnet, dass** die Reinigung des Glasscheibenrohlings (12) und die Detektion der Fehlstellen (16, 18) des Glasscheibenrohlings (12) während einer kontinuierlichen Förderung des Glasscheibenrohlings (12) erfolgt.

3. Verfahren nach einem der voranstehenden Ansprüche, **dadurch gekennzeichnet, dass** die Reinigung des Glasscheibenrohlings (12) und die Detektion der Fehlstellen (16, 18) des gereinigten Glasscheibenrohlings (12) über die gesamte, quer einer Transportrichtung (20) des Glasscheibenrohlings (12) gemessene Breite (22) des Glasscheibenrohlings (12) erfolgt.

4. Verfahren nach einem der voranstehenden Ansprüche, **dadurch gekennzeichnet, dass** der Glasscheibenrohling (12) eine Breite (22) von 3,21 Meter aufweist.

5. System (10) zur Herstellung von zugeschnittenen Glasscheiben, umfassend eine Transporteinrichtung (26) zum Transport eines nicht zugeschnittenen Glasscheibenrohlings (12) und ein Trennwerkzeug (36) zur Trennbearbeitung des Glasscheibenrohlings (12), mit einer Reinigungseinrichtung (28) zur Reinigung des Glasscheibenrohlings (12), mit einer Detektierungseinrichtung (34) zur Detektierung von Fehlstellen (16, 18) in dem Glasscheibenrohling (12), wobei in Transportrichtung (20) des Glasscheibenrohlings (12) gesehen die Reinigungseinrichtung (28) vor der Detektierungseinrichtung (34) angeordnet ist und die Detektierungseinrichtung (34) vor dem Trennwerkzeug (36) angeordnet ist, **dadurch gekennzeichnet, dass** die Reinigungseinrichtung (28) zur Reinigung des Glasscheibenrohlings (12) in dessen unbearbeitetem Ausgangszustand eine Abblaseinrichtung mit einer quer zu der Transportrichtung (20) des Glasscheibenrohlings (12) orientierten Blasleiste (30) zur Erzeugung eines auf die Oberfläche des Glasscheibenrohlings gerichteten Gasfluidstroms umfasst, und dass das System (10) eine zweite Reinigungseinrichtung (48) zur Reinigung von mindestens einer mittels des Trennwerkzeugs aus dem Glasscheibenrohling (12) zugeschnittenen Glasscheibe (14) umfasst, wobei die zweite Reinigungseinrichtung (48) eine Wascheinrichtung (50) und eine Trockeneinrichtung (52) umfasst.

6. System (10) nach Anspruch 5, **dadurch gekennzeichnet, dass** die Blasleiste (30) eine Vielzahl von Blasdüsen umfasst.

7. System (10) nach Anspruch 5 oder 6, **dadurch gekennzeichnet, dass** die Reinigungseinrichtung (28) eine Absaugeinrichtung (32) umfasst.

8. System (10) nach einem der Ansprüche 5 bis 7, **dadurch gekennzeichnet, dass** die Detektierungseinrichtung (34) einen optischen Sensor zur Erfassung des Materials des Glasscheibenrohlings (12) und ein Bildauswertungssystem zur Bestimmung von Fehlstellen (16, 18) des Glasscheibenrohlings (12) umfasst.

## Claims

1. Method for producing cut glass panes (14), in which an uncut glass pane blank (12) is provided and the glass pane blank (12) is machined with a parting tool (36) in order to produce at least one glass pane (14) that is cut to a desired size, the uncut glass pane blank (12) being cleaned, defects (16, 18) in the glass pane blank (12) then being detected and subsequent parting of the glass pane blank (12) being carried out depending on the desired size of the at least one glass pane (14) and depending on the detected defects (16, 18), **characterized in that** cleaning the glass pane blank (12) in the unmachined initial state thereof involves supplying the surface of the glass pane blank (12) with a gas fluid flow that is formed as a blowing flow directed towards the surface of the glass pane blank (12), and **in that** the at least one glass pane (14) that is cut to the desired size is cleaned by being washed and dried.

2. Method according to claim 1, **characterized in that** cleaning the glass pane blank (12) and detecting the defects (16, 18) in the glass pane blank (12) occur while the glass pane blank (12) is being continuously conveyed.

3. Method according to either of the preceding claims, **characterized in that** cleaning the glass pane blank (12) and detecting the defects (16, 18) in the cleaned glass pane blank (12) occur over the entire width (22) of the glass pane blank (12), which width is measured transversely to a transport direction (20) of the glass pane blank (12).

4. Method according to any of the preceding claims, **characterized in that** the glass pane blank (12) has a width (22) of 3.21 meters.

5. System (10) for producing cut glass panes, comprising a transport device (26) for transporting an uncut glass pane blank (12) and a parting tool (36) for parting the glass pane blank (12), comprising a cleaning device (28) for cleaning the glass pane blank (12), and comprising a detecting device (34) for detecting defects (16, 18) in the glass pane blank (12), the cleaning device (28) being arranged upstream of the detecting device (34) as viewed in the transport direction (20) of the glass pane blank (12), and the detecting device (34) being arranged upstream of the parting tool (36) as viewed in the transport direction of the glass pane blank, **characterized in that** the cleaning device (28) for cleaning the glass pane blank (12) in the unmachined initial state thereof comprises a blow-off device having a blowing strip (30), which is oriented transversely to the transport direction (20) of the glass pane blank (12), for producing a gas fluid flow that is directed towards the surface of the glass pane blank, and **in that** the system (10) comprises a second cleaning device (48) for cleaning at least one glass pane (14) that is cut from the glass pane blank (12) by the parting tool, the second cleaning device (48) comprising a washing device (50) and a drying device (52).

6. System (10) according to claim 5, **characterized in that** the blowing strip (30) comprises a plurality of blowing nozzles.

7. System (10) according to claim 5 or claim 6, **characterized in that** the cleaning device (28) comprises an exhaust system (32).

8. System (10) according to any of claims 5 to 7, **characterized in that** the detecting device (34) comprises an optical sensor for sensing the material of the glass pane blank (12) and an image analysis system for identifying defects (16, 18) on the glass pane blank (12).

## Revendications

1. Procédé de fabrication de vitres coupées à dimension (14), selon lequel une ébauche de vitre (12) non coupée à dimension est fournie et l'ébauche de vitre (12) est usinée au moyen d'un outil de sectionnement (36), afin de produire une vitre (14) coupée à une dimension de consigne, l'ébauche de vitre (12) non coupée à dimension étant nettoyée, des défauts (16, 18) étant ensuite détectés dans l'ébauche de vitre (12) et l'usinage par sectionnement de l'ébauche de vitre (12) lui faisant alors suite étant réalisé en fonction de la dimension de consigne de la ou des vitres (14) et en fonction des défauts (16, 18) détectés, **caractérisé en ce que** le nettoyage de l'ébauche de vitre (12), dans l'état initial non usiné de celle-ci, consiste à exposer la surface de l'ébauche de vitre (12) à un courant de fluide gazeux, qui est réalisé sous la forme d'un courant soufflé orienté sur la surface de l'ébauche de vitre (12), et **en ce que** la ou les vitres (14) coupées à dimension de consigne sont nettoyées en étant lavées et séchées.

2. Procédé selon la revendication 1, **caractérisé en ce que** le nettoyage de l'ébauche de vitre (12) et la détection des défauts (16, 18) de l'ébauche de vitre (12) sont réalisés pendant un transport continu de l'ébauche de vitre (12).

3. Procédé selon l'une quelconque des revendications précédentes, **caractérisé en ce que** le nettoyage de l'ébauche de vitre (12) et la détection des défauts (16, 18) de l'ébauche de vitre (12) nettoyée sont réalisés sur toute la largeur (22) de l'ébauche de vitre (12) mesurée transversalement à une direction de transport (20) de l'ébauche de vitre (12).

4. Procédé selon l'une quelconque des revendications précédentes, **caractérisé en ce que** l'ébauche de vitre (12) présente une largeur (22) de 3,21 mètres.

5. Système (10) de fabrication de vitres coupées à dimension, comprenant un dispositif de transport (26) pour le transport d'une ébauche de vitre (12) non coupée à dimension et un outil de sectionnement (36) pour l'usinage par sectionnement de l'ébauche de vitre (12), pourvu d'un dispositif de nettoyage (28) pour le nettoyage de l'ébauche de vitre (12), d'un dispositif de détection (34) pour la détection de défauts (16, 18) dans l'ébauche de vitre (12), le dispositif de nettoyage (28), vu dans la direction de transport (20) de l'ébauche de vitre (12), étant agencé devant le dispositif de détection (34) et le dispositif de détection (34) étant agencé devant l'outil de sectionnement (36), **caractérisé en ce que** le dispositif de nettoyage (28) destiné au nettoyage de l'ébauche de vitre (12) dans l'état initial non usiné de celle-ci comporte un dispositif de soufflage pourvu d'une barrette de soufflage (30) orientée transversalement à la direction de transport (20) de l'ébauche de vitre (12) pour la production d'un courant de fluide gazeux orienté sur la surface de l'ébauche de vitre, et **en ce que** le système (10) comporte un deuxième dispositif de nettoyage (48) pour le nettoyage d'au moins une vitre (14) coupée à dimension à partir de l'ébauche de vitre (12) au moyen de l'outil de sectionnement, le deuxième dispositif de nettoyage (48) comportant un dispositif de lavage (50) et un dispositif de séchage (52).

6. Système (10) selon la revendication 5, **caractérisé en ce que** la barrette de soufflage (30) comporte une pluralité de buses de soufflage.

7. Système (10) selon la revendication 5 ou 6, **caractérisé en ce que** le dispositif de nettoyage (28) comporte un dispositif d'aspiration (32).

8. Système (10) selon l'une quelconque des revendications 5 à 7, **caractérisé en ce que** le dispositif de détection (34) comporte un capteur optique destiné à détecter le matériau de l'ébauche de vitre (12) et un système d'analyse d'image pour l'identification de défauts (16, 18) de l'ébauche de vitre (12).
